# EUROPEAN PATENT APPLICATION

(11) **EP 2 408 259 A1**
(43) Date of publication of application: **18.01.2012**
(21) Application number: 11250614.2
(22) Date of filing: 29.06.2011
(51) Int. Cl.: H05B 3/82, A47J 27/21, C02F 1/00, C02F 1/48

(54) **Electric heating device and electric heater comprising the same**

(30) Priority: 15.07.2010 CN 201020259953 U
(71) Applicant: Li, Ka Ki Kathy, Hong Kong (HK)
(72) Inventor: Tang, Zhou Liang, Hong Kong (HK); Li, On Wo, N.T., Hong Kong (HK); Li, Ka Ki Kathy, N.T., Hong Kong (HK)
(74) Representative: Powell, Timothy John

(57) **Abstract**

The invention relates to an electric heating device (1) and an electric heater comprising the same. The electric heating device comprises a first heat conducting element (14) comprising opposing lateral surface A and lateral surface B, and the lateral surface A being in contact with an aqua liquid or aqueous solution to be heated; an electric heating element (13) in thermally conductive connection with the first heat conducting element; a temperature sensor plate (4) in thermally conductive connection with the first heat conducting element; and a magnetic module (12) attached onto the first heat conducting element. The electric heater comprises a container housing, the above electric heating device and temperature control means arranged beneath the container housing. The arrangement of the magnetic module in the electric heating device to generate a magnetic field allows up and down circulatory movement of the aqua liquid or aqueous solution during the heating process, so as to cut magnetic field lines to get properly magnetized, with the result of achieving the descaling effect fundamentally. The magnetized water is of important significance for enhancing vital activity, anti-aging, and longevity. The invention could prolong the lifespan of the container of the electric heater and ensure the reliable operation of the temperature control means.

## Description

### Field of the Invention

The invention relates to an electric heating device and an electric heater comprising the electric heating device, and more particularly to an electric heating device for heating and magnetizing water or aqueous solutions without formation of scaling, and an electric heater comprising the same.

### Background of the Invention

There are various types of electric heaters for heating water or aqueous solutions, such as an electric thermos, an electric kettle, a water heater, a humidifier, a coffee brewer, a distilling device, and the like. During the heating process, the existing electric heaters have generally the following deficiencies:
1. It is known that a relatively large amount of calcium (Ca) and magnesium (Mg) ions are present in the tap water, calcium carbonate (CaCO₃) and magnesium carbonate (MgCO₃) are formed as acicular crystals when the tap water is heated to 35°C, and the crystals are firmly attached onto walls of the heating container to create a large amount of incrustation scale which is hard to be removed. The scale has a very low thermal conductivity which is about 1/10 ~ 1/100 of the thermal conductivity of a steel material, therefore the scale is a poor heat conductor. After the formation of a scale layer on the walls of the container of the electric heater, not only the thermal efficiency will be greatly reduced, but also the power consumption will be substantially increased, leading to a huge wastage of electric energy. It becomes worse that transfer of the heat energy within the heating elements to the water or aqueous solution is blocked by the thick scale layer formed on the container walls of the electric heater. As a result, the heat energy within the heating elements will be continuously increased. When a crack is formed in the scale layer, the water or aqueous solution inside the container permeates into the space defined by the scale layer and the walls of the container, and would be subject to the high temperature of the container walls to vaporize instantly. This may lead to an explosion of the electric heater and pose a series threat to the life and property of the user.
2. The scale is relatively quite corrosive, and therefore the electric heater tends to deteriorate under the corrosive action of the scale over time.
3. The existing electric heaters cannot reduce water hardness, and the long term consumption of the hard water heated by the existing electric heaters would result in reduced metabolic rate and reduced digestion and absorption rate of nutrient contents. In addition, the large amount of calcium (Ca) and magnesium (Mg) ions in the hard water may react with acidic materials in the human body to afford calcium carbonate and magnesium carbonate, which may cause lithiasis (such as gall lithiasis, renal lithiasis, or the like) with serious damage to human organs or impairment of the functions of the organs.

### Summary of the Invention

One object of the invention is the provision of an electric heating device to overcome the defects of the existing electric heaters including easy formation of scale, failure to reduce water hardness, and potential risk of explosion.

Another object of the invention is the provision of an electric heater to overcome the defects of the existing electric heaters including easy formation of scale, failure to reduce water hardness, and potential risk of explosion.

The above objects are attained by providing an electric heating device, comprising
a first heat conducting element comprising opposing lateral surface A and lateral surface B, and the lateral surface A being in contact with an aqua liquid or aqueous solution to be heated,
an electric heating element in thermally conductive connection with the first heat conducting element, and
a temperature sensor plate for driving temperature control means and in thermally conductive connection with the first heat conducting element;
wherein the device further comprises a magnetic module for generating a magnetic field and attached onto the first heat conducting element.

In one preferred embodiment of the invention, the electric heating device further comprises a second heat conducting element comprising two opposing lateral surfaces, one of which is secured to the electric heating element and the other of which is in firm surface contact with the lateral surface B of the first heat conducting element; and the temperature sensor plate is in thermally conductive connection with the first heat conducting element or the second heat conducting element.

In another preferred embodiment of the invention, the electric heating device further comprises a third heat conducting element in thermally conductive connection with the first heat conducting element or the second heat conducting element, and the temperature sensor plate is in surface contact and thermally conductive connection with the third heat conducting element.

In a further preferred embodiment of the invention, the first heat conducting element comprises a disc-shaped body having an annular flanged edge, and a cavity arranged at a central portion of the disc-shaped body and protruding toward one side of the lateral surface A; the surface of the second heat conducting element in surface contact with the lateral surface B of the first heat conducting element mates with and is in firm surface contact with a shape of an internal surface of the cavity; and the magnetic module is attached within an annular area surrounding the cavity.

In a yet preferred embodiment of the invention, the first heat conducting element comprises a disc-shaped body having an annular flanged edge, and a cavity arranged at a central portion of the disc-shaped body and protruding toward one side of the lateral surface A; the surface of the second heat conducting element in surface contact with the lateral surface B of the first heat conducting element mates with and is in firm surface contact with a shape of an internal surface of the cavity; the third heat conducting element is a Ω-shaped support having a top in firm surface contact with a central portion of the second heat conducting element and having bottom flanged edges in surface contact and thermally conductive connection with the temperature sensor plate; and the magnetic module is attached within an annular area surrounding the cavity and between two legs of the Ω-shaped support.

The electric heating device of the invention advantageously comprises a metal housing in thermally conductive seal connection with the first heat conducting element; and the magnetic module is attached onto the metal housing.

The second aspect of the invention is to provide an electric heater, comprising:
a container housing,
an electric heating device and temperature control means arranged beneath the container housing, said electric heating device comprising
a first heat conducting element comprising opposing lateral surface A and lateral surface B, and the lateral surface A being in contact with an aqua liquid or aqueous solution to be heated,
an electric heating element in thermally conductive connection with the first heat conducting element, and
a temperature sensor plate for driving the temperature control means and in thermally conductive connection with the first heat conducting element;
wherein the said electric heating device further comprises a magnetic module for generating a magnetic field and attached onto the first heat conducting element.

In one particular embodiment of the electric heater, the electric heating device further comprises a second heat conducting element comprising two opposing lateral surfaces, one of which is secured to the electric heating element and the other of which is in firm surface contact with the lateral surface B of the first heat conducting element; and the temperature sensor plate is in thermally conductive connection with the first heat conducting element or the second heat conducting element.

In another particular embodiment of the electric heater, the electric heating device further comprises a third heat conducting element in thermally conductive connection with the first heat conducting element or the second heat conducting element, and the temperature sensor plate is in surface contact and thermally conductive connection with the third heat conducting element.

In a further particular embodiment of the electric heater, the first heat conducting element comprises a disc-shaped body having an annular flanged edge, and a cavity arranged at a central portion of the disc-shaped body and protruding toward one side of the lateral surface A; the surface of the second heat conducting element in surface contact with the lateral surface B of the first heat conducting element mates with and is in firm surface contact with a shape of an internal surface of the cavity; the third heat conducting element is a Ω-shaped support having a top in firm surface contact with a central portion of the second heat conducting element and having bottom flanged edges in surface contact and thermally conductive connection with the temperature sensor plate; and the magnetic module is attached within an annular area surrounding the cavity and between two legs of the Ω-shaped support.

The advantages of the electric heating device and the electric heater comprising the same over the prior art include the following:
1. The arrangement of the magnetic module in the electric heating device to generate a magnetic field allows up and down circulatory movement of the aqua liquid or aqueous solution during the heating process, so as to cut magnetic field lines to get properly magnetized. The magnetized water allows for reduction in hydrogen bond angle of the water molecule from 105° to about 103°, which leads to the change of the physicochemical properties of the water, for example leads to significantly increased activity and solubility of the water. In this case, the harmful substances including calcium carbonate and magnesium carbonate in the water are decomposed into relatively soft substances for example Ca(HCO₃)₂ and Mg(HCO₃)₂. The soft substances can be carried away by the water without depositing onto the walls of the container. The magnetized water also allows for high degree of polymerization of the water, such that the dissolved solid substances are transformed into smaller particles with decreased distance between the two ions to yield an increased binding force therebetween. In this way, the solid substances are not prone to deposit on the walls of the container, whereby to achieve the descaling effect fundamentally.
2. The magnetized water results in breaking of the hydrogen bonds between the water molecules. Thus, the associated water molecules become discrete molecules and the long bonds become relatively short, such that the permeability and solubility of the water are substantially increased, accompanied with increased oxygen content and improved solubility for organic compounds. This would facilitate digestion and absorption of nutrients. The magnetized water molecule clusters can enter into body cells through hydrophilic paths of two nanometers to activate the calcium system, a second messenger of human body, and the cell enzyme system and the histiocytes, which are of important significance for enhancing vital activity, anti-aging, and longevity.
3. The invention successfully solves the problem of scale formation on the electric heaters, eliminating the corrosion of the walls of the container caused by the scale. The lifespan of the container of the electric heater is therefore prolonged.
4. The electric heating device of the invention has the third heat conducting element for mounting the temperature control means, which provides the ease of the design and arrangement of the temperature control means to ensure the reliability of the temperature control means.

### Brief Description of the Drawings

The invention will be illustrated in more details by way of example with reference to the accompanying drawings, wherein:
Fig. 1 is a sectional view of an electric heating device constructed according to one embodiment of the invention;
Fig. 2 is a bottom view of Fig. 1;
Fig. 3 is a schematic view of the magnetic field in the embodiment of Fig. 1;
Fig. 4 is a sectional view of an electric heater constructed according to one embodiment of the invention;
Fig. 5 is a sectional view taken from line A-A of Fig. 4;
Fig. 6 is a sectional view taken from line B-B of Fig. 4; and
Fig. 7 is a schematic view of the magnetic field in the embodiment of Fig. 4.

### Detailed Description of the Preferred Embodiments

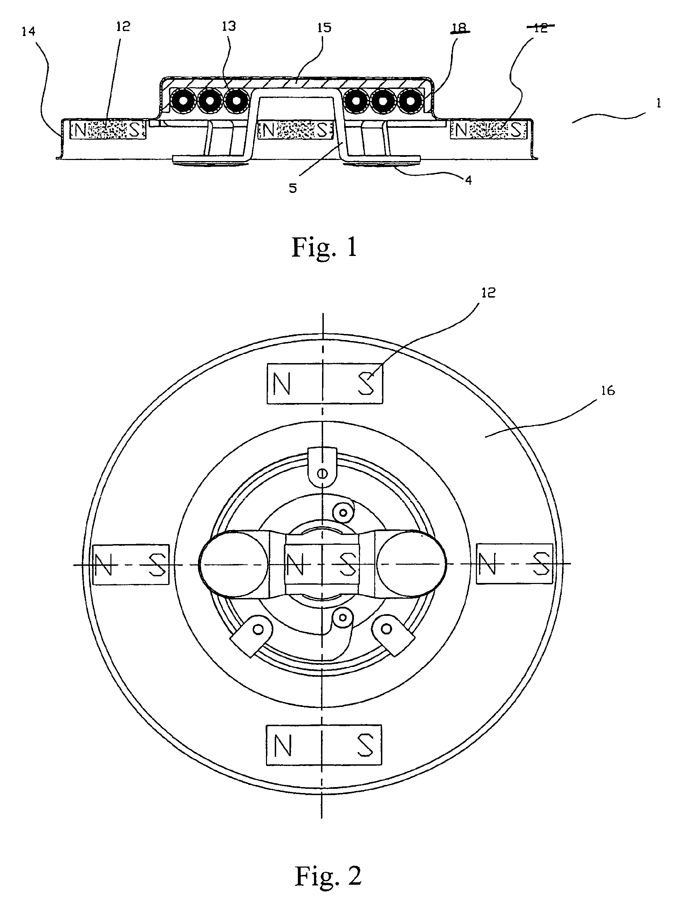

Figs. 1 and 2 illustrate an electric heating device 1 constructed according to one preferred embodiment of the invention. The electric heating device 1 comprises a first heat conducting element 14, a second heat conducting element 15, a third heat conducting element 5, an electric heating element 13, a temperature sensor plate 4 (for example a bimetal piece) for driving temperature control means, and a magnetic module 12.

The magnetic module 12 may employ various components which can generate a magnetic field. For example, a circular magnet, a bar magnet, an arch magnet, a round magnet, a horseshoe magnet, a coil capable of generating a magnetic field, or the like may be used as the magnetic module 12.

In a particular embodiment, the first heat conducting element 14 is made of a magnetizable material for example stainless steel, and magnetized to become the magnetic module. Namely, the magnetic module and the first heat conducting element 14 may be provided as one component.

The electric heating element 13 may be provided in the form of a stainless steel heating tube, an iron heating tube, an aluminum heating tube, a copper heating tube, a heating filament, a heating plate, a heating wire, an electronic heating module, or the like.

The first heat conducting element 14 comprises two opposing lateral surfaces - a lateral surface A (upper lateral surface in the figure) on which the electric heating device 1 is in contact with an aqua liquid (water) or aqueous solution to be heated, and a lateral surface B (lower lateral surface in the figure).

The second heat conducting element 15 comprises two opposing lateral surfaces. One of the lateral surfaces is secured to the electric heating element 13 to ensure good heat conduction between the electric heating element 13 and the second heat conducting element 15 for the purpose of the high thermal efficiency of the electric heating device. The second heat conducting element 15 is generally made of aluminum or aluminum alloy. The other lateral surface of the second heat conducting element 15 is in firm surface contact with the lateral surface B of the first heat conducting element 14.

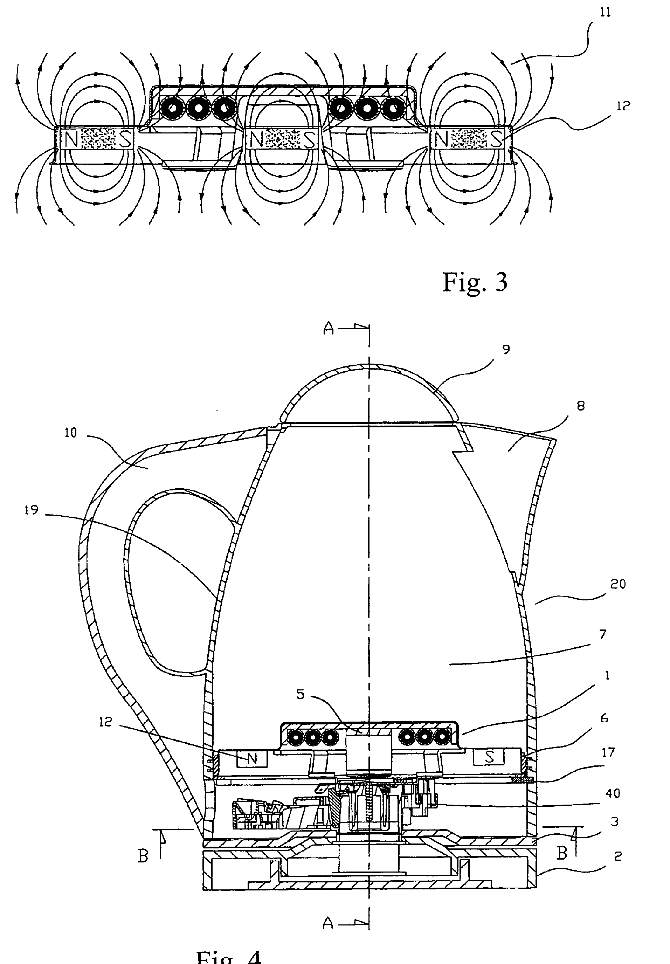

In this embodiment, the first heat conducting element 14 is configured as a disc-shaped body having an annular flanged edge, and a cavity 18 is arranged at a central portion of the disc-shaped body and protrudes toward one side of the lateral surface A. The surface of the second heat conducting element 15 in surface contact with the lateral surface B of the first heat conducting element 14 is designed to mate with and is in firm surface contact with a shape of an internal surface of the cavity 18. The electric heating element 13 is wound along an edge of the second heat conducting element 15 with a spacing reserved in a central portion of the second heat conducting element 15. The third heat conducting element 5 is configured as a Ω-shaped support having a top in firm surface contact with the central portion of the second heat conducting element 15. The temperature sensor plate 4 is in surface contact and thermally conductive connection with flanged edges at the bottom of the Ω-shaped support. The magnetic module 12 is connected with the first heat conducting element 14 within an annular area 16 surrounding the cavity 18 (the magnetic module 12 may be arranged at either the lateral surface A or the lateral surface B of the first heat conducting element 14) between two legs of the Ω-shaped support (the same purpose can be realized even if the magnetic module 12 is arranged merely at the first heat conducting element 14 within the annular area surrounding the cavity 18). The magnetic field 11 generated by the magnetic module 12 is shown in Fig. 3.

According to other embodiments, the third heat conducting element 5 may be of other configurations according to design requirements and arrangements, for example a Z-shaped configuration.

According to other embodiments, the third heat conducting element 5 may be connected to the first heat conducting element 14.

In other embodiments, it is possible to eliminate the third heat conducting element 5, and the temperature sensor plate 4 is directly in thermally conductive connection with the first heat conducting element 14 or the second heat conducting element 15.

According to other embodiments, the electric heating element 13 may be in thermally conductive connection with the first heat conducting element 14.

In other embodiments, it is possible to eliminate the second heat conducting element 15, and the electric heating element 13 is directly in thermally conductive connection with the first heat conducting element 14.

In other embodiments, the first heat conducting element 14 does not have the cavity 18, which can still produce the effect of the invention.

According to other embodiments, the magnetic module 12 may be attached at other positions of the first heat conducting element 14 (the term "attached" herein refer to an attachment of the magnetic module onto the first heat conducting element directly or indirectly via other structural members, or to the case where the magnetic module and the first heat conducting element 14 are provided as one component by magnetization of the first heat conducting element). For example, the magnetic module 12 may be connected to the support which is then connected to the first heat conducting element 14.

In other embodiments, there may be provided a metal housing which is in thermally conductive seal connection with the first heat conducting element 14 (the thermally conductive seal connection between the metal housing and the first heat conducting element 14 allows the heat transfer from the first heat conducting element 14 to the aqua liquid or aqueous solution to be heated in such a manner that the metal housing acts as a part of the electrical heating device, but also prevents the water leakage when the metal housing and the first heat conducting element 14 are combined to construct a container in which the aqua liquid or aqueous solution is loaded). The magnetic module 12 may be attached onto the metal housing.

In a particular embodiment, the metal housing is made of a magnetizable material for example stainless steel. In this case, the metal housing may be magnetized to become the magnetic module.

The electric heater of the invention is made up of the foregoing electric heating device. In particular, the electric heater comprises a container housing, and the electric heating device and temperature control means arranged beneath the container housing. Apart from the use of the electric heating device as discussed above, the remaining components and structures of the electric heater of the invention may be constructed in the same way as, but not limited to, those found in the prior art.

Figs. 4 to 7 illustrate a specific embodiment of the electric heater according to the invention. In this embodiment, the electric heater is formed as a water heater 20, which comprises a water storage container 7, an electric heating device 1 and temperature control means 40 arranged beneath the water storage container 7, a bottom cover 3 and a base unit 2 mounted at the bottom of the water storage container 7. The base unit 2 is electrically connected with an external power supply and cooperates with the bottom cover 3 for powering the electric heating device 1.

The water storage container 7 comprises a container body 19 (which may be made of an engineering plastic or metal), on which a water outlet 8, a handle 10, a container cover 9 matchable with an upper end opening of the container body 19, a temperature control switch, and a container cover switch are arranged.

The electric heating device 1 and variants thereof have been discussed above and are therefore not described.

The electric heating device 1 is in seal connection with the container body 19 via a sealing member 6 and a retainer ring 17.

The container body 19 of the water storage container 7 may be made of metallic materials. In this case, the bottom of the container body 19 can be firmly secured to the electric heating device 1 through the soldering, laser, or flanging technologies.

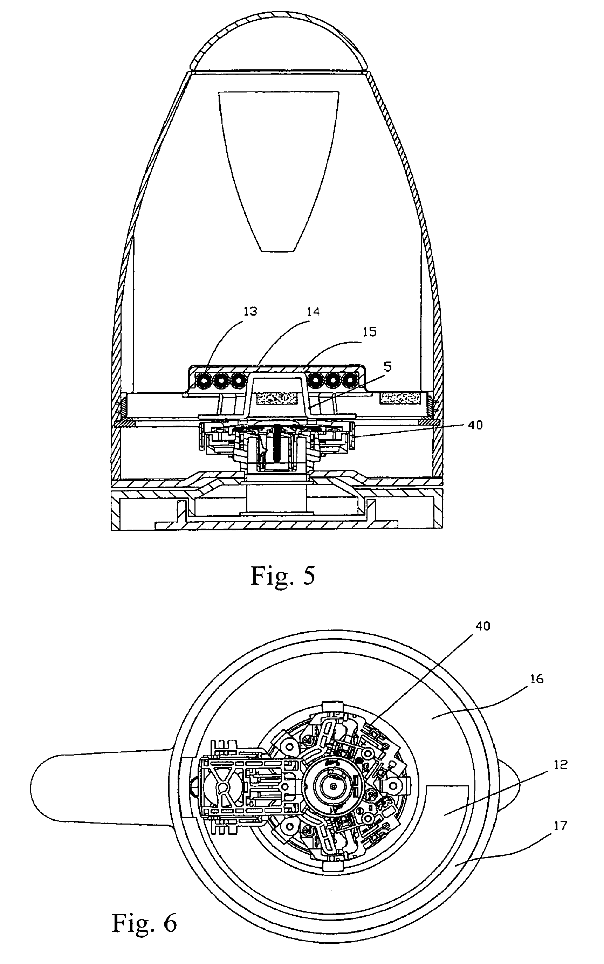

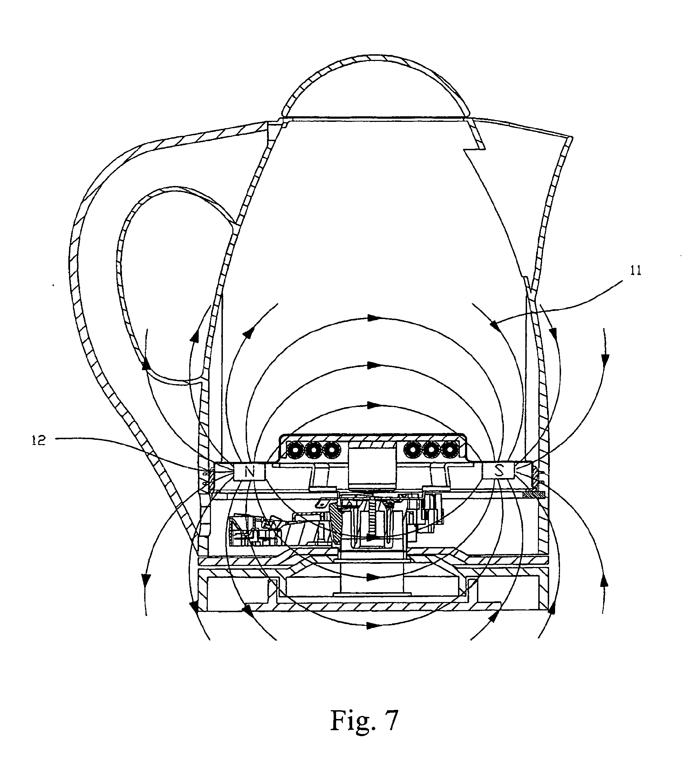

In this embodiment, a semicircular magnet is used as the magnetic module 12 of the electric heating device 1 (as shown in Fig. 6) to generate a magnetic field shown in Fig. 7.

## Claims

1. An electric heating device, comprising
a first heat conducting element comprising opposing lateral surface A and lateral surface B, and the lateral surface A being in contact with an aqua liquid or aqueous solution to be heated,
an electric heating element in thermally conductive connection with the first heat conducting element, and
a temperature sensor plate for driving temperature control means and in thermally conductive connection with the first heat conducting element;
**characterized in that** the device further comprises a magnetic module for generating a magnetic field and attached onto the first heat conducting element.

2. An electric heating device of claim 1, further comprising a second heat conducting element comprising two opposing lateral surfaces, one of which is secured to the electric heating element and the other of which is in firm surface contact with the lateral surface B of the first heat conducting element; and the temperature sensor plate is in thermally conductive connection with the first heat conducting element or the second heat conducting element.

3. An electric heating device of claim 2, further comprising a third heat conducting element in thermally conductive connection with the first heat conducting element or the second heat conducting element, and the temperature sensor plate is in surface contact and thermally conductive connection with the third heat conducting element.

4. An electric heating device of claims 2 or 3, wherein the first heat conducting element comprises a disc-shaped body having an annular flanged edge, and a cavity arranged at a central portion of the disc-shaped body and protruding toward one side of the lateral surface A; the surface of the second heat conducting element in surface contact with the lateral surface B of the first heat conducting element mates with and is in firm surface contact with a shape of an internal surface of the cavity; and the magnetic module is attached within an annular area surrounding the cavity.

5. An electric heating device of claim 3, wherein the first heat conducting element comprises a disc-shaped body having an annular flanged edge, and a cavity arranged at a central portion of the disc-shaped body and protruding toward one side of the lateral surface A; the surface of the second heat conducting element in surface contact with the lateral surface B of the first heat conducting element mates with and is in firm surface contact with a shape of an internal surface of the cavity; the third heat conducting element is a Ω-shaped support having a top in firm surface contact with a central portion of the second heat conducting element and having bottom flanged edges in surface contact and thermally conductive connection with the temperature sensor plate; and the magnetic module is attached within an annular area surrounding the cavity and between two legs of the Ω-shaped support.

6. An electric heating device of any one of claims 1 to 3, further comprising a metal housing in thermally conductive seal connection with the first heat conducting element; and the magnetic module is attached onto the metal housing.

7. An electric heater, comprising:
a container housing,
an electric heating device and temperature control means arranged beneath the container housing, said electric heating device comprising
a first heat conducting element comprising opposing lateral surface A and lateral surface B, and the lateral surface A being in contact with an aqua liquid or aqueous solution to be heated,
an electric heating element in thermally conductive connection with the first heat conducting element, and
a temperature sensor plate for driving the temperature control means and in thermally conductive connection with the first heat conducting element;
**characterized in that** the said electric heating device further comprises a magnetic module for generating a magnetic field and attached onto the first heat conducting element.

8. An electric heater of claim 7, wherein the electric heating device further comprises a second heat conducting element comprising two opposing lateral surfaces, one of which is secured to the electric heating element and the other of which is in firm surface contact with the lateral surface B of the first heat conducting element; and the temperature sensor plate is in thermally conductive connection with the first heat conducting element or the second heat conducting element.

9. An electric heater of claim 8, wherein the electric heating device further comprises a third heat conducting element in thermally conductive connection with the first heat conducting element or the second heat conducting element, and the temperature sensor plate is in surface contact and thermally conductive connection with the third heat conducting element.

10. An electric heater of claim 9, wherein the first heat conducting element comprises a disc-shaped body having an annular flanged edge, and a cavity arranged at a central portion of the disc-shaped body and protruding toward one side of the lateral surface A; the surface of the second heat conducting element in surface contact with the lateral surface B of the first heat conducting element mates with and is in firm surface contact with a shape of an internal surface of the cavity; the third heat conducting element is a Ω-shaped support having a top in firm surface contact with a central portion of the second heat conducting element and having bottom flanged edges in surface contact and thermally conductive connection with the temperature sensor plate; and the magnetic module is attached within an annular area surrounding the cavity and between two legs of the Ω-shaped support.
